# EUROPEAN PATENT APPLICATION

(11) **EP 1 721 868 A1**
(43) Date of publication of application: **15.11.2006**
(21) Application number: 05104015.2
(22) Date of filing: 13.05.2005
(51) Int. Cl.: C02F 1/467

(54) **Additive solution for use in the production of electrolyzed hypochlorous acid-containing sterilizing water**

(71) Applicant: OSG CORPORATION CO., LTD., Osaka-shi, Osaka, 543-0043 (JP)
(72) Inventor: Yukawa, Takeshi, Osaka-shi 543-0043, Osaka (JP)
(74) Representative: Henkel, Feiler & Hänzel

(57) **Abstract**

Single-part additive solution for use in the production of electrolyzed hypochlorus acid-containing sterilizing water prepared by mixing and dissolving, in advance, HCl and NaCl in a predetermined amount of water.

## Description

### [Technical Field]

The present invention relates to additive solutions suitable for use in the production of hypochlorous acid-containing sterilizing water by electrolysis.

### [Background Art]

Aqueous hypochlorous acid solution changes to hypochlorite (ClO⁻) at pH 8 or higher. Along with this change, the sterilizing ability of the solution severely decreases in comparison to that of hypochlorous acid (HClO).

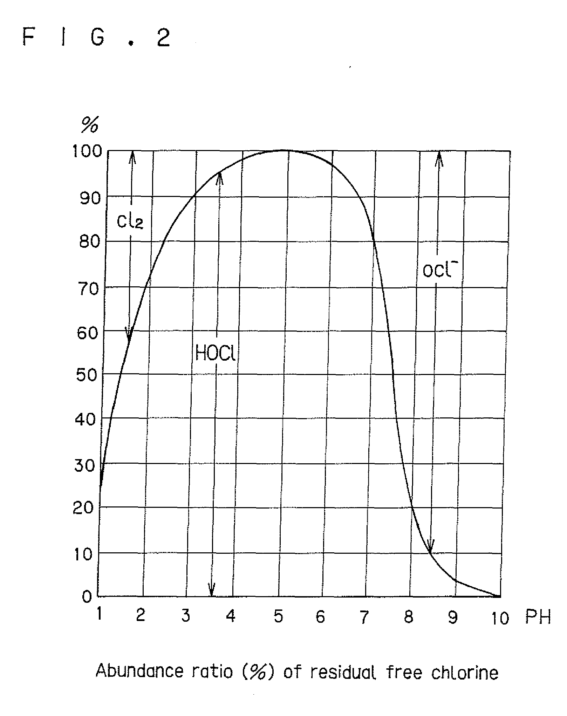

It is, however, known that in a pH range of from 3 to 7 hypochlorous acid is kept in the form of HClO and the sterilizing ability drastically increases (see, Fig. 2). Accordingly, even if an aqueous hypochlorous acid solution having a pH of 3-7 has a low residual chlorine concentration of about 30 to 60 ppm, it has a sterilization effect similar to that of sterilizing water of pH 8 having a residual chlorine concentration of about 200 ppm. A method which has been used for producing such kind of sterilizing water comprises electrolyzing an aqueous sodium chloride solution to yield an aqueous hypochlorous acid solution having a pH of 3-7.
[Patent Document 1] Japanese Patent Unexamined Application Publication No. 2-111371

### [Disclosure of the Invention]

### [Problems to Be Solved by the Invention]

It, however, takes a very long time to dissolve NaCl at room temperature as soon as the concentration thereof has reached about 25%. This will cause a problem in that if the presence of crystallized NaCl is not noticed, hypochlorous acid-containing sterilizing water having a predetermined pH value and a predetermined concentration is not produced though a predetermined amount of NaCl has been added.

In addition, the raw water of an aqueous sodium chloride solution contains calcium (Ca) dissolved mainly in the form of calcium bicarbonate (Ca(HCO₃)₂). During the electrolysis of the aqueous sodium chloride solution, therefore, the Ca deposits on the cathode. This will cause troubles such as an increase in electrolysis voltage and reduction in electrolysis current.
On a similar reason the water flow resistance increases, resulting in a reduction in water feed. Particularly, it becomes impossible for an electrolytic device which performs electrolysis with continuous water flow to work continuously.

Then, a method for producing sterilizing water by adding both sodium chloride and an aqueous hydrochloric acid solution to raw water and then conducting electrolysis was proposed. In this method, the addition of hydrochloric acid (HCl) causes the following reaction: CaCO₃↓ + 2HCl → CaCl₂ + H₂CO₂. While CaCO₃ dissolves in the solution in the form of CaCl₂ to eliminate the deposition of Ca, HCl reduces the pH value of the electrolyzed water to a desired value 3-7.
Thus, two different effects are obtained at the same time.

However, this method suffers from the following problems:
An aqueous solution of sodium chloride (NaCl) and that of hydrochloric acid (HCl) both having predetermined concentrations are separately added to raw water. Therefore, when attempting to produce electrolyzed sterilizing water by addition of such a two-part additive solution, it is difficult to secure accurate mixing. Particularly even, for example, a trouble in one of the solution feed pumps will render the mixing ratio wrong so as to result in a failure to yield a desired pH value.

Accordingly, a main object of the present invention is to simultaneously solve the above-mentioned problems by providing a single-part additive solution for use in the production of electrolyzed hypochlorous acid-containing sterilizing water prepared by mixing and dissolving, in advance, HCl and NaCl in a predetermined amount of water.

Incidentally, waters of various qualities, such as tap water and groundwater, are used in the production of hypochlorous acid-containing sterilizing water by electrolysis and, therefore, on-demand determination of an NaCl-to-HCl concentration ratio in an additive solution in the preparation of strongly sterilizable sterilizing water of pH 3-7 and a residual chlorine concentration of 30 to 60 ppm is extremely complicated and requires expert knowledge.

Another object of the present invention, therefore, is to provide the above-mentioned single-part additive solution having an NaCl-to-HCl concentration ratio adjusted in advance within predetermined ranges so that sterilizing water having a pH value and a residual chlorine concentration within the above-mentioned ranges can be obtained from waters of various qualities.

### [Means for Solving the Problems]

One of the objects of the present invention is attained by an additive solution for use in the production of electrolyzed hypochlorous acid-containing sterilizing water prepared by dissolving sodium chloride (NaCl) in an aqueous hydrochloric acid solution.

The other object of the present invention is attained by an additive solution for use in the production of electrolyzed hypochloric acid-containing sterilizing water, wherein the additive solution has an NaCl concentration of from 10 to 30 weight/volume % (hereinafter, expressed by W/V%) and the hydrochloric acid is contained in a concentration of 1/6 to 1/3 of the NaCl concentration.

Because in the additive solutions for use in the production of electrolyzed hypochloric acid-containing sterilizing water of the present invention, an aqueous HCl solution and NaCl are combined to form a single-part solution, it is possible to reduce the pH value of the sterilizing water resulting from the neutralizing action of HCl to 3-7 at a smaller electric power consumption and it also is possible to prevent the deposition of calcium (Ca).

Moreover, because NaCl is dissolved in an aqueous HCl solution, a good NaCl dissolution efficiency is achieved and neither the pH nor the residual chlorine concentration of the sterilizing water unexpectedly varies. Furthermore, if electrolysis is carried out after addition of the above-mentioned additive solution in which the NaCl concentration is adjusted within the range of from 10 W/V% to 30 W/V% and a mixing ratio is adjusted so that the hydrochloric acid concentration be 1/6 to 1/3 the NaCl concentration, to the raw water of the additive solution, the whole amount of water formed by diaphragmless electrolyzation is maintained within the pH range of from 3 to 7. Also regarding the water formed by diaphragm electrolysis using electrodes separated by a diaphragm, a mixture of the water formed in the anode side and that formed in the cathode side is maintained within the pH range of from 3 to 7 as a whole.

That is to say, in an aqueous hypochlorous acid solution having a pH value within that range, most of the residual chlorine is maintained in the form of HOCl and water with the greatest sterilizing ability is obtained.

### [Effect of the Invention]

Because the additive solutions of the present invention are composed of an aqueous HCl solution and NaCl dissolved therein, a good NaCl dissolution efficiency is achieved. In addition, it is possible to reduce the pH value of the sterilizing water resulting from the neutralizing action of HCl to 3-7 at a smaller electric power and it also is possible to prevent the deposition of calcium.

Moreover, the solutions are single-part solutions, the NaCl-to-HCl concentration ratio during their addition does not become a wrong ratio unlike in conventional solutions and hypochlorous acid-containing sterilizing water having a desired pH value and a desired residual chlorine concentration is certainly obtained.

Furthermore, use of a single-part additive solution having an NaCl-to-HCl concentration ratio specified within the above-mentioned range makes it possible to produce hypochlorous acid-containing sterilizing water having a pH within the range of from 3 to 7 and a residual chlorine concentration in the range of from 30 to 60 ppm from waters of various qualities and, therefore, it is not troublesome. Furthermore, because the additive solutions have an HCl concentration up to 10%, they may be sold in the market and it is possible for general consumers having no expert knowledge to use them safely.

### [Best Mode for Carrying Out the Invention]

The solutions of the present invention are additive solutions which are mixed with raw water to be electrolyzed during the production of a hypochlorous acid-containing sterilizing water via an electrolysis process. They basically are prepared by dissolving sodium chloride (NaCl) in a solvent prepared by mixing an aqueous hydrochloric acid solution. As previously stated, an aqueous hypochlorous acid solution has the strongest sterilizing ability when the pH value is within the range of from 3 to 7. It is, therefore, advantageous for the additive solutions of the present invention that the concentration ratio of hydrochloric acid and NaCl is specified so that the pH value of electrolyzed hypochlorous acid-containing sterilizing water products produced using raw waters of various qualities will always fall within such a pH value range. Electrolyzed water prepared by electrolyzing raw water containing an additive solution or products prepared by diluting the electrolyzed water with unelectrolyzed raw water are collectively referred to as the "electrolyzed hypochlorous acid-containing sterilizing water product" used herein.

As a result of many studies and researches, it was found that an additive solution in which the NaCl concentration is from 10 W/V% to 30 W/V% and hydrochloric acid is contained in a concentration of 1/6 to 1/3 of the NaCl concentration, can yield hypochlorous acid-containing sterilizing waters having a pH value within the range of 3-7 even when it is added to waters of various qualities and then electrolyzed. It was also found that the additive solution can meet to the above-mentioned request.

### [Example 1]

105 g of NaCl and 58.1 ml of aqueous HCl solution (35%) were dissolved in raw water to yield 1,000 ml in total of additive solution of the present invention. The concentrations of NaCl and HCl are as follows.

NaCl concentration: 105 ÷ 1,000 = 0.105 = 10.5 W/V%

HCl concentration: 58.1 ÷ 1,000 x 35 = 2.0 V/V% (volume %)

### [Example 2]

300 g of NaCl and 150 ml of aqueous HCl solution (35%) were dissolved in raw water to yield 1,000 ml in total of additive solution of the present invention. The concentrations of NaCl and HCl are as follows.

NaCl concentration: 300 ÷ 1,000 = 0.3 = 30 W/V%

HCl concentration: 150 ÷ 1,000 x 35 = 5.25 V/V% (volume %)

The HCl concentrations in Examples (1) and (2) are expressed in V/V% (volume %). Because the specific gravity of hydrochloric acid (HCl) at room temperature (15°C) is 1.178 and the density of water is 0.999 g/ml, the HCl concentrations expressed in V/V% are converted to concentrations in W/V% as follows in correspondence with the NaCl concentrations. The HCl concentration in Example (1), namely 2.0 V/V% is converted to 58.1 x 1.177 x 0.35 ÷ 1,000 = 0.0239 = 2.4 W/V%. The HCl concentration in Example (2), namely 5.25 V/V% is converted to 150 x 1.177 x 0.35 ÷ 1,000 = 0.0617 = 6.2 W/V%.

The drawing is a schematic explanatory diagram of a system in which an additive solution according to the present invention is added to raw water and electrolyzed in a diaphragmless cell and the resulting electrolyzed water is diluted with raw water and then discharged as a hypochlorous acid-containing sterilizing water product.

In this system, a solution of the present invention, which is a single-part solution (1) containing HCl and NaCl dissolved therein, is added to raw water (2) fed from a water feed port via a flow switch (3), a valve (4), a flow meter (5) and a check valve (6). While the mixed solution is supplied to an electrolytic cell continuously from its bottom, electrolysis of the solution is conducted by applying DC bath voltage to the cathode (7) and the anode (8). At the same time, raw water (2) is introduced to the electrolysis cell. Electrolyzed water is diluted with this unelectrolyzed raw water to thereby produce hypochlorous acid-containing sterilizing water having a pH within the range of from 3 to 7 and a residual chlorine concentration in the range of from 30 to 60 ppm from an outlet port (9).

Although a case of using a diaphragmless cell is shown in the drawing, additive solutions of the present invention can, of course, be applied for cases of using diaphragm cells as well.

### [Industrial Applicability]

The present invention, which is directed to use of hypochlorous acid-containing sterilizing water for sterilization, can be employed safely by even general consumers having no expert knowledge.

### [Brief Description of the Drawings]

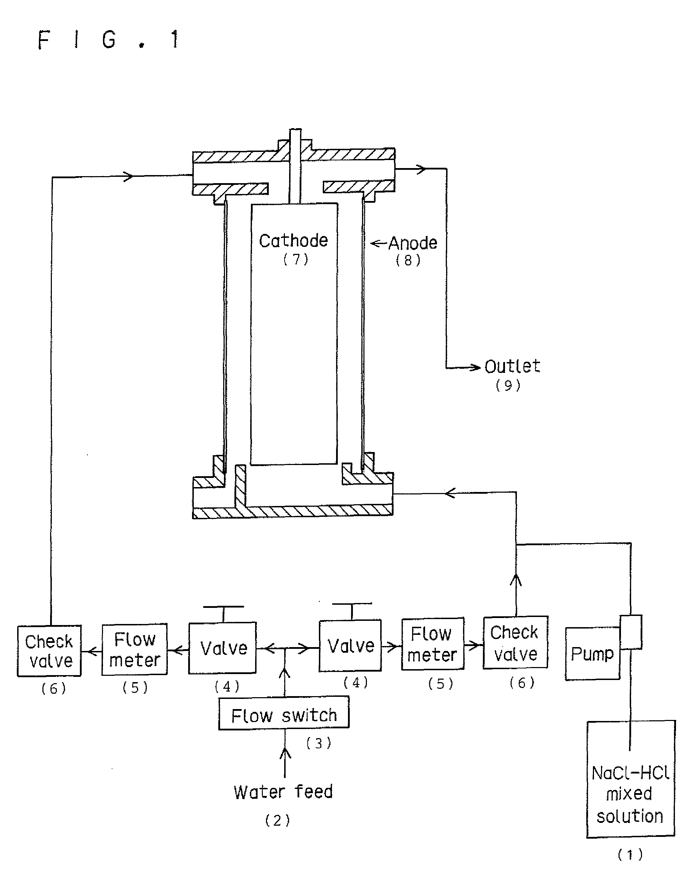

[Fig. 1] A schematic piping diagram of a system for producing hypochlorous acid-containing sterilizing water using additive solution of the present invention.
[Fig. 2]
   A diagram showing the relationship between the abundance ratio of residual free chlorine and the pH.

## Claims

1. An additive solution for use in the production of electrolyzed hypochlorous acid-containing sterilizing water, the additive solution comprising an aqueous hydrochloric acid solution and sodium chloride (NaCl) dissolved therein.

2. The additive solution for use in the production of electrolyzed hypochloric acid-containing sterilizing water according to claim 1, wherein the additive solution has an NaCl concentration of from 10 to 30 W/V% and contains hydrochloric acid in a concentration of 1/6 to 1/3 of the NaCl concentration.
